Europäisches Patentamt

European Patent Office

Office européen des brevets

(11) Veröffentlichungsnummer: **0 009 167**
**B1**

(12) **EUROPÄISCHE PATENTSCHRIFT**

(45) Veröffentlichungstag der Patentschrift: **03.11.82**

(21) Anmeldenummer: **79103267.5**

(22) Anmeldetag: **04.09.79**

(51) Int. Cl.³: **B 02 C 13/14,**
**B 02 C 18/12, A 21 D 2/36**

(54) Maschine zum Zerkleinern von Restbrot.

(30) Priorität: **15.09.78 DE 7827589 U**

(43) Veröffentlichungstag der Anmeldung:
**02.04.80 Patentblatt 80/7**

(45) Bekanntmachung des Hinweises auf die Patenterteilung:
**03.11.82 Patentblatt 82/44**

(84) Benannte Vertragsstaaten:
**AT BE FR GB IT LU NL**

(56) Entgegenhaltungen:
**DE - A - 1 507 603**
**DE - A - 1 801 181**
**DE - B - 1 057 811**
**FR - A - 708 098**
**FR - A - 1 362 284**
**GB - A - 799 615**
**GB - A - 1 163 570**
**US - A - 3 214 105**

(73) Patentinhaber: **Ismar, GmbH**
**Machabäerstrasse**
**D-5000 Köln 1 (DE)**

(72) Erfinder: **Ismar, Theodor**
**Machabäerstrasse 28**
**D-5000 Köln 1 (DE)**

(74) Vertreter: **Grupe, Peter, Dipl.-Ing. et al,**
**Patentanwaltsbüro Tiedtke-Bühling-Kinne-Grupe-**
**Pellmann Bavariaring 4**
**D-8000 München 2 (DE)**

Maschine zum Zerkleinern von Restbrot

Die Erfindung bezieht sich auf eine Maschine zum Zerkleinern von Restbrot gemäß dem Oberbegriff des Patentanspruchs 1.

Backversuche haben ergeben, daß die Brotqualität bei einem bestimmten Zusatz von feinvermahlenem Restbrot wesentlich gesteigert werden kann. Die bisher für die Zerkleinerung von Restbrot bekannten Maschinen haben den Nachteil, daß sie mit großen Belastungsschwankungen arbeiten. Größere Brotstücke geraten sehr schnell in den Bereich der Mahlwerks und verursachen dort Belastungsstöße, die die Leistung des Mahlwerks erheblich mindern.

In der DE—OS 1 507 603 ist eine Hammermühle mit den Merkmalen des Oberbegriffs des Patentanspruchs 1 beschrieben, die jedoch zum Zerkleinern und Mahlen von landwirtschaftlichen Produkten, insbesondere Getreide, ausgelegt ist und aus diesem Grunde für Brot, das weich und zähelastisch ist, völlig ungeeignet ist. Insbesondere frisches Brot würde im Vorzerkleinerer dieser bekannten Maschine durch Reibungswärme verklumpen, was auf den Roggen und Kleber bzw. die Stärke im Mehl zurückzuführen ist, da als Vorzerkleinerungselemente Nocken auf der Läuferscheibe montiert sind, die keinesfalls eine Brotzerkleinerungsfunktion übernehmen können. Ein Hindurchtreten von vorzerkleinertem Restbrot durch den Ringspalt in die eigentliche Hammermühle hinein dürfte daher ausgeschlossen sein.

Der Erfindung liegt die Aufgabe zugrunde, eine Maschine gemäß dem Oberbegriff des Patentanspruchs 1 derart auszubilden, daß sie insbesondere auch frisches Restbrot in Form halber und ganzer Brote einwandfrei zerkleinert und Belastungsschwankungen gering gehalten werden.

Diese Aufgabe wird erfindungsgemäß mit den im kennzeichnenden Teil des Patentanspruchs 1 aufgeführten Merkmalen gelöst.

Die erfindungsgemäß vorgesehenen, tangential ausgerichteten Vorschneidmesser zerreißen ohne weiteres halbe und ganze Brote, ohne daß stoßartige Belastungen des Mahlwerkantriebs auftreten, und zerkleinern das Mahlgut auf die durch den Ringspalt vorgegebene Größe. Das vorzerkleinerte Mahlgut wird dann mittels der am Rand der Läuferscheibe im Ringspalt umlaufenden Einzugszähne durch den Ringspalt in die darunter angeordnete Hammermühle transportiert, wobei den Einzugszähnen zugleich noch eine gewisse Zerkleinerungsfunktion zukommt. Auf diese Weise ist ein Verklumpen auch frischen Restbrots ausgeschlossen und ein optimaler Transport des Mahlguts durch das Mahlwerk hindurch sichergestellt.

Eine sehr günstige Vorzerkleinerung ergibt sich dadurch, daß eine Mehrzahl von Vorschneidmessern vorgesehen ist, von denen jeweils zwei in unterschiedlichem Abstand diametral gegenüber angeordnet sind.

Die Einzugszähne sind in Weiterbildung der Erfindung zur Horizontalen geneigt und an dem Rand der Läuferscheibe angeschweißt. Es muß nicht besonders betont werden, daß die Neigung der Einzugszähne so auf die Drehrichtung des Läufers abgestimmt ist, daß der gewünschte Transport des vorzerkleinerten Mahlguts in die Hammermühle erfolgt.

Vorzugsweise sind an der zylindrischen Innenwand des Mahlwerkgehäuses Brechleisten angeordnet, wobei ein Teil der Wandung im Bereich der Hammermühle von einem auswechselbaren Sieb gebildet ist, an das sich ein Auslauf anschließt.

Zweckmäßig sind die unteren Enden der die Schlaghämmer der Hammermühle tragenden Bolzen in einem Läuferflansch gehalten und durch eine auf die Oberseite der Läuferscheibe aufgesetzte Scheibe gesichert. Hierdurch ergibt sich ein mechanisch fester und sicherer Sitz, der die Schlaghämmer tragenden Bolzen und eine sehr einfache Montage der Hammermühle.

Die Erfindung wird nachstehend anhand der Beschreibung eines Ausführungsbeispiels unter Bezugnahme auf die Zeichnung näher erläutert. Es zeigen:

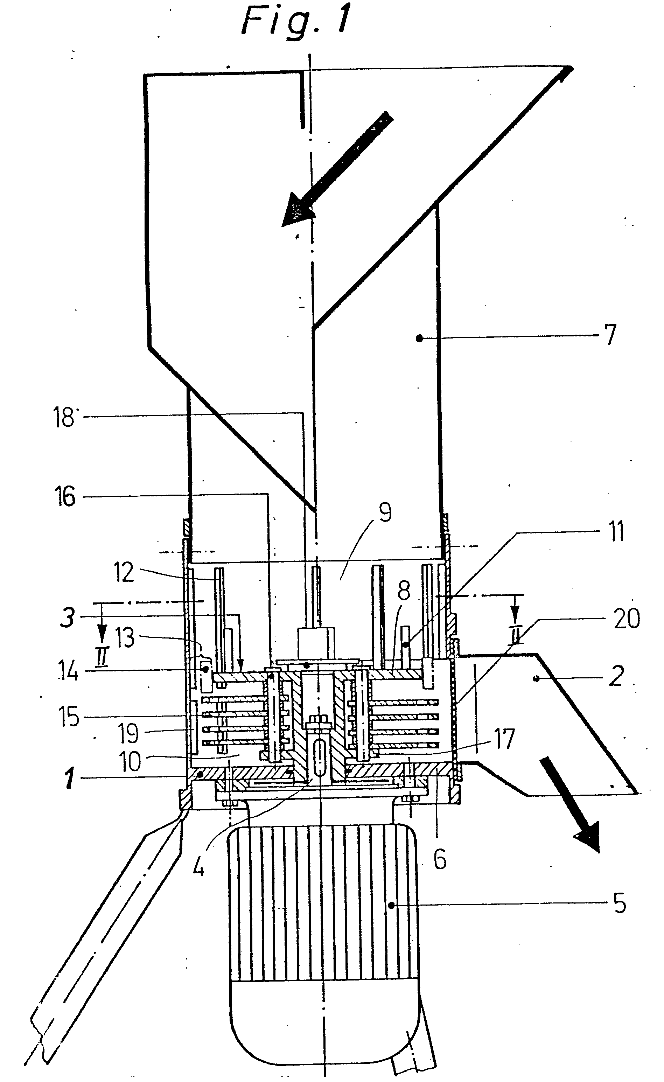

Fig. 1 einen senkrechten Schnitt durch eine Restbrot-Zerkleinerungsmaschine,

Fig. 2 einen waagerechten Schnitt durch die Restbrot-Zerkleinerungsmaschine gemäß Fig. 1 entlang der Linie II—II und

Fig. 3 einen Teilschnitt durch den Läufer der dargestellten Restbrot-Zerkleinerungsmaschine entlang der Linie III—III in Fig. 2.

Die dargestellte Maschine besitzt ein Gehäuse 1 in Form eines unten geschlossenen, aufrecht stehenden Zylinders mit einem aufklappbaren Auslauf 2. Der Läufer 3 des Mahlwerks sitzt direkt auf der Welle 4 des Antriebsmotors 5, die durch den Gehäuseboden 6 hindurch zentral in das Innere des Gehäuses 1 ragt. Der Antriebsmotor 5 ist an der Unterseite des Gehäusebodens 6 befestigt. Auf das oben offene Gehäuse 1 ist ein Aufgabetrichter 7 aufgesetzt.

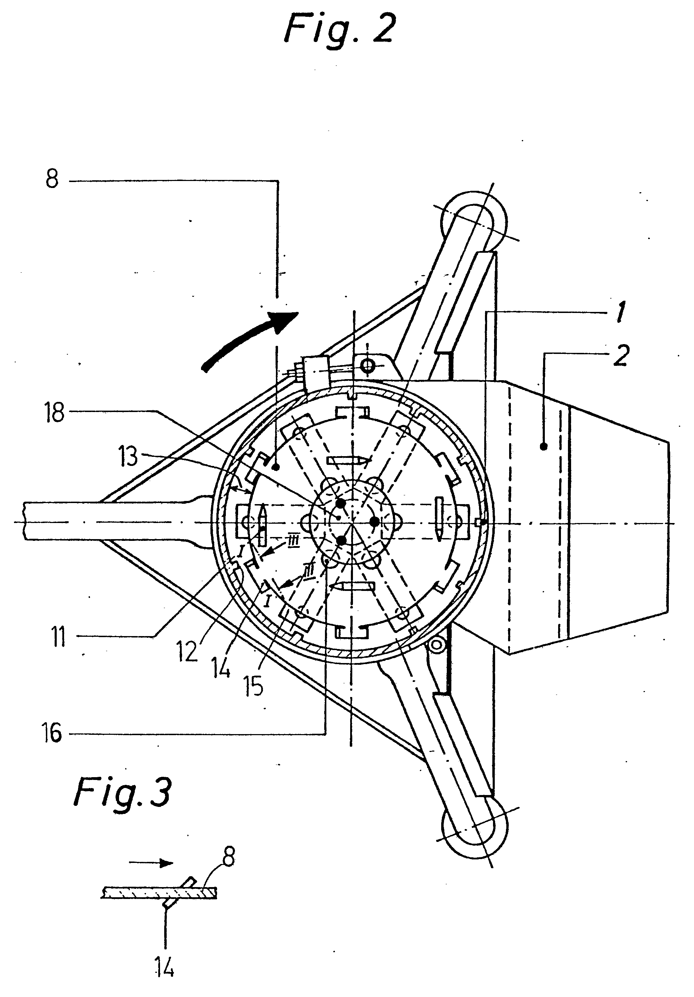

Der Läufer 3 besitzt eine obere Läuferscheibe 8, die das Gehäuseinnere in zwei Kammern unterteilt, nämlich eine obere Vorzerkleinerungskammer 9 und eine untere Mahlkammer 10. Auf der Oberseite der Läuferscheibe 8 sitzen vier Schneidmesser 11, deren Schneidkanten im wesentlichen parallel zur Drehachse des Läufers verlaufen und die tangential ausgerichtet sind, wie insbesondere Fig. 2 zeigt. Aus Fig. 2 wird ferner deutlich, daß jeweils zwei Schneidmesser diametral gegenüberliegend angeordnet sind und daß die Abstände der beiden Schneidmesser jedes Paares unterschiedlich groß sind.

An der zylindrischen Innenwand des Gehäuses 1 sitzen den Schneidmessern 11 gegenüberliegend und dieselben nach oben überragend Brechleisten 12, die beim Vorzerkleinern mit den Schneidmessern 11 zusammenwirken.

Der Außenrand der Läuferscheibe 8 steht in einem vorgegebenen Abstand zur Innenwand des Gehäuses 1 und bildet damit einen Ringspalt 13. In diesem Ringspalt 13 laufen Einzugszähne 14 um, die aus kleinen Blechplatten bestehen, die zur Horizontalen geneigt an dem Rand der Läuferscheibe 8 angeschweißt sind. Wie Fig. 3 zeigt, ist die Neigung der Einzugszähne 14 so gewählt, daß sie das in der Vorzerkleinerungskammer 9 vorzerkleinerte Mahlgut durch den Ringspalt 13 nach unten in die Mahlkammer 10 fördern.

In dieser Mahlkammer 10 laufen Schlaghämmer 15 um, von denen jeweils vier auf einem Bolzen 16 in vorgegebenem Abstand angeordnet sind. Wie Fig. 2 zeigt, sind insgesamt sechs Gruppen von je vier Schlaghämmern 15 vorgesehen. Die Bolzen 16 sitzen an ihrem unteren Ende in einem Läuferflansch 17 und mit ihrem oberen Ende in der Läuferscheibe 8. Durch eine zentral auf die Läuferscheibe aufgesetzte Sicherheitsscheibe 18 werden die oberen Köpfe der Bolzen an einer Bewegung nach oben gehindert. Auch in der Mahlkammer 10 sind an zylindrischen Innenwand des Gehäuses 1 Brechleisten 19 angeordnet, die den freien Enden der Schlaghämmer 15 auf Abstand gegenüberstehen und mit diesen beim Mahlen zusammenwirken.

Im Bereich des Auslaufs 2 wird die Mahlkammer 10 durch ein auswechselbares Sieb 20 begrenzt, durch das das Mahlgut zum Auslauf 2 durchtritt, sobald es die durch die Siebgröße vorgegebene Feinheit erlangt hat.

Die Wirkungsweise der beschriebenen Vorrichtung ist folgende: Das in den Aufgabetrichter 7 eingegebene Restbrot, bei dem es sich auch um halbe und ganze Brote handeln kann, gelangt in die Vorzerkleinerungskammer 9 und wird dort von den Schneidmessern 11 im Zusammenwirken mit den Brechleisten 12 vorzerkleinert. Die Vorzerkleinerung erfolgt solange, bis die Mahlgutteile eine Größe erhalten haben, die ein Hindurchtreten derselben durch den Ringspalt 13 in die Mahlkammer 10 zur weiteren Feinzerkleinerung erlaubt.

Die Einzugszähne 14 führen das vorzerkleinerte Mahlgut den Schlaghämmern 15 zu. Diese wirken mit den Brechleisten 19 zusammen und führen die Feinzerkleinerung durch. Erst wenn das Mahlgut so weit zerkleinert ist, daß es die Löcher des Siebs 8 passieren kann, wird es über den Auslauf 2 ausgetragen. Durch Austausch des Siebes 20 gegen ein solches mit anderer Lochgröße kann der Feinheitsgrad des Mahlgutes variiert werden.

**Patentansprüche**

1. Maschine zum Zerkleinern von Restbrot mit einem Mahlwerk in Form eines Vorzerkleinerers mit auf der Oberseite einer Läuferscheibe (8) angebrachten Vorzerkleinerungselementen und einer an der Unterseite der Läuferscheibe angeordneten, dem Vorzerkleinerer nachgeschalteten Hammermühle, die über einen Ringspalt (13) zwischen der Läuferscheibe und dem Gehäuse (1) des Mahlwerks miteinander verbunden sind, dadurch gekennzeichnet, daß als Vorzerkleinerungselemente tangential ausgerichtete Vorschneidmesser (11) vorgesehen und am Rand der Läuferscheibe im Ringspalt umlaufende Einzugszähne (14) angebracht sind.

2. Maschine nach Anspruch 1, dadurch gekennzeichnet, daß eine Mehrzahl von Vorschneidmessern (11) vorgesehen ist, von denen jeweils zwei in unterschiedlichem Abstand diametral gegenüber angeordnet sind.

3. Maschine nach Anspruch 1 oder 2, dadurch gekennzeichnet, daß die Einzugszähne (14) zur Horizontalen geneigt an dem Rand der Läuferscheibe (8) angeschweißt sind.

4. Maschine nach einem der vorhergehenden Ansprüche, dadurch gekennzeichnet, daß an der zylindrischen Innenwand des Mahlwerkgehäuses (1) Brechleisten (12, 19) angeordnet sind und ein Teil der Wandung im Bereich der Hammermühle von einem auswechselbaren Sieb (20) gebildet ist, an das sich ein Auslauf (2) anschließt.

5. Maschine nach einem der vorhergehenden Ansprüche, bei der die unteren Enden der die Schlaghämmer (15) der Hammermühle tragenden Bolzen (16) in einem Läuferflansch (17) gehaltert sind, dadurch gekennzeichnet, daß die Bolzen durch eine auf die Oberseite der Läuferscheibe (8) aufgesetzte Scheibe (18) gesichert sind.

**Claims**

1. Machine for the grinding of left-over bread with a grinding mill in the form of a preliminary grinding device having preliminary grinding elements arranged on the upper side of a rotor disc (8), and a hammer mill arranged at the bottom side of said rotor disc and subsequently to said preliminary grinding device, that are connected with each other via an annular gap (13) between said rotor disc and the housing (1) of said grinding mill, characterized in that tangentially arranged pre-cutting knives (11) are provided as said preliminary grinding elements, and in that feeding teeth (14) are provided at the rim of said rotor disc revolving in said annular gap.

2. Machine according to claim 1, characterized in that a plurality of said pre-cutting knives (1) is provided, of which two each are arranged at different distances and diametrically opposite from each other.

3. Machine according to claims 1 or 2, characterized in that said feeding teeth (14) are inclined towards the horizontal and welded to the rim of said rotor disc (8).

4. Machine according to one of the preceding claims, characterized in that breaker strips (12, 19) are arranged at the cylindrical inner wall of said grinding mill housing (1), and in that a portion of the wall in the area of said hammer mill is formed by an exchangeable strainer (20) to which a chute (2) is adjoined.

5. Machine according to one of the preceding claims, wherein the lower ends of the bolts (16) bearing the mill hammers (15) of said hammer mill are held in a rotor flange (17), characterized in that said bolts are secured by a disc (18) superimposed upon the upper side of said rotor disc (8).

## Revendications

1. Machine de broyage de pain résiduel comportant un mécanisme de broyage se présentant sous la forme d'un prébroyeur comportant des éléments de prébroyage placés sur la face supérieure d'un disque de rotor 8 et d'un broyeur à marteaux placé à la suite du prébroyeur et disposés sur la face inférieure du disque du rotor, reliés entre eux par un passage annulaire 13 interposé entre le disque du rotor et le boîtier 1 du broyeur, caractérisé en ce que les éléments de prébroyage prévus sont des lames de précoupage 11 dirigées tangentiellement, et en ce que des dents d'introduction 14 tournant dans le passage annulaire sont situées sur le bord du disque du rotor.

2. Machine selon la revendication 1, caractérisée en ce qu'elle comporte plusieurs lames de précoupage 11 diamétralement opposées deux à deux à distance variable.

3. Machine selon la revendication 1 ou 2, caractérisée en ce que les dents d'introduction 14 sont soudées, inclinées par rapport à l'horizontale, au bord du disque 8 du rotor.

4. Machine selon l'une quelconque des revendications précédentes, caractérisée en ce qu'elle comporte sur la paroi intérieure cylindrique du boîtier 1 du mécanisme de broyage des nervures de concassage (12, 19) et en ce qu'une partie de la paroi est réalisée dans la zone du broyeur à marteaux sous la forme d'un tamis amovible 20 auquel se raccorde une décharge 2.

5. Machine selon l'une quelconque des revendications précédentes, dans laquelle les extrémités inférieures des axes 16 portant les marteaux 15 du broyeur à marteaux sont maintenues dans une bride 17 du rotor, caractérisée en ce que les axes sont immobilisés par un disque 18 placé sur la face supérieure du disque 8 du rotor.

# Fig. 1

# Fig. 2

# Fig.3